# EUROPEAN PATENT APPLICATION

(11) **EP 1 136 816 A2**
(43) Date of publication of application: **26.09.2001**
(21) Application number: 01105302.2
(22) Date of filing: 06.03.2001
(51) Int. Cl.: G01N 23/20

(54) **X-ray spectroscopic analyzer having sample surface observation mechanism**

(30) Priority: 07.03.2000 JP 2000062093
(71) Applicant: Rigaku Industrial Corporation, Takatsuki-shi, Osaka-fu 569-1146 (JP)
(72) Inventor: Kojima, Shinjirou, c/o Rigaku Industr.Corp., Takatsuki-shi, Osaka-fu, 569-1146 (JP); Segawa, Takao, c/o Rigaku International Corp., Tokyo 151-0051 (JP); Ikeshita, Akihiro, c/o Rigaku Industr.Corp., Takatsuki-shi, Osaka-fu, 569-1146 (JP); Yamagami, Motoyuki, c/o Rigaku Industr.Corp., Takatsuki-shi, Osaka-fu, 569-1146 (JP)
(74) Representative: Beetz & Partner Patentanwälte

(57) **Abstract**

An X-ray spectroscopic analyzer having a mechanism for observing a sample surface, for analyzing a sample 3 by irradiating X-ray 4 thereupon within a chamber 2, comprises: a viewer apparatus 11 for letting the sample to be viewed; and an illumination means 31 for illuminating a surface of the sample 3, by irradiating an illuminating light B upon the surface of the sample 3 obliquely, while suppressing an incidence of a reflecting light of the illuminating light B upon the viewer apparatus 11. With such the construction, a shape of a contaminated portion, a residue or the like, upon the sample surface, can be clearly observed under dark field on the viewer apparatus 11, while keeping the sample 3 set within the X-ray spectroscopic analyzer 1.

## Description

### BACKGROUND OF THE INVENTION

### 1. FIELD OF THE INVENTION

The present invention relates to an X-ray spectroscopic analyzer having a sample surface observation mechanism, for observing a sample surface of, such as, a semiconductor wafer, etc.

### 2. DESCRIPTION OF PRIOR ART

A silicon wafer, which is treated on a semiconductor manufacture line, is sometimes contaminated upon the surfaces thereof, on a way of processing thereof. For estimating the cause of such the contamination upon the wafer surface, it is necessary to investigate a chemical element(s) at the contaminated portion thereof, and for an analysis of such the chemical element(s), in particular, it is very effective to use or apply a total reflection X-ray fluorescence analyzer.

Conventionally, in a case where the analysis is conducted on the chemical element at the contaminated portion by using such a total reflection X-ray fluorescence analyzer, however since it takes an enormous large amount of time for detection it if the analysis is targeted on a whole area of the wafer surface, the whole area of the wafer surface is inspected but only for the purpose of specifying the contaminated portion thereon, by means of a surface analyzer which is prepared separately, prior to the operation of the X-ray spectroscopic analysis. Then, the chemical element(s) is analyzed by irradiating X-ray upon the coordinate position of the specified contaminated portion in the X-ray spectroscopic analysis.

However, according to such manner, the sample must be set into the X-ray spectroscopic analyzer, again after specifying the contaminated portion by the separated analyzer, therefore the operation comes to be troublesome, and there is a possibility that the sample is further contaminated on the way of transportation for re-setting thereof into the X-ray spectroscopic analyzer.

Also, as one for conducting the X-ray spectroscopic analysis on the wafer surface by using such the total reflection X-ray fluorescence analyzer, there is already known a method, in which a solution, such as hydrofluoric acid, is collected at one position after being pasted upon the wafer surface, so as to dissolve therein the oxide layers and the contaminants, as well, and it is dried up to be a dried residue thereon, and then the X-ray is irradiated upon the residue, thereby to analyze the chemical element(s) of the contaminants. In this case, while irradiating the X-ray upon the wafer surface over a certain area, where the residue is expected to lie, a position where the fluorescence X-ray generating from the wafer surface comes up to be the maximum in intensity thereof is specified as that of the residue, thereby conducting the inherent analysis (i.e., the X-ray spectroscopic analysis) at that position specified.

However, with such the manner for specifying the position of the residue, in particular in a case where the concentration is low of the impurities in the above-mentioned solution and/or in a case of a blank sample having only the concentration lower than the detection limits thereof, and also not only when measuring the solution of impurities, such as, the above-mentioned solution dissolving therein the oxide layers and/or the contaminants adhered upon the wafer surface, but also when measuring the solution containing therein a very small amount of various chemical elements or a very small amount of metals contained within an organic matter, the fluorescence X-ray does not generate from the position of the residue with a sufficient intensity thereof, even when the X-ray is irradiated thereupon, therefore it is difficult to specify the position of the residue.

Then, conventionally, sometimes in such the case, amaterial, including a specific chemical element(s) therein, is added in advance into the solution, such as, hydrofluoric acid, or into the solution to be dripped, thereby to identify or specify the position of the residue by means of the intensity of the X-ray which is generated from that material. However, in this case, the sample is contaminated further more with that additional material, therefore it is not a method being applicable in general.

### SUMMARY OF THE INVENTION

Accordingly, an object according to the present invention is, for dissolving such the drawbacks in the conventional arts mentioned above, to provide an X-ray spectroscopic analyzer having a mechanism for observing a sample surface, with which a shape can be clearly observed of the contaminated portion, the residue or the like, upon the sample surface under dark field, but in a condition of maintaining the sample being set in the X-ray spectroscopic analyzer.

And then, according to the present invention, for accomplishing such the object mentioned above, there is provided an X-ray spectroscopic analyzer for analyzing a sample by irradiating X-ray thereupon within a chamber, having a mechanism for observing a sample surface therethrough, comprising: a viewer apparatus for letting the sample to be viewed therethrough; and an illumination means for illuminating a surface of the sample, by irradiating an illuminating light upon the surface of said sample obliquely, while suppressing an incidence of a reflection light from the illumination light upon said viewer apparatus.

With such the construct ion, a shape of a contaminated portion, a residue or the like, upon the sample surface, can be clearly observed under dark field on the viewer apparatus, while keeping the sample set within the X-ray spectroscopic analyzer.

Also, according to the present invention, there is provided the X-ray spectroscopic analyzer having a mechanism for observing a sample surface, as described in the above, further comprising, a moving means for moving the sample at least between an X-ray irradiation position where the X-ray is irradiated upon and a viewing position where a view is made upon, and a position indicator means for indicating the viewing position on the sample thereupon.

With such the construction, the sample can be positioned automatically by means of the moving means, so that the X-ray can be irradiated upon that viewing position, such as the contaminated portion or the residue on the sample surface, which is displayed on the position indicator means.

Further, according to the present invention, there is provided the X-ray spectroscopic analyzer having a mechanism for observing a sample surface, as described in the above, wherein said viewer apparatus comprises an image pickup element for taking a picture of the surface of said sample, so as to output a video signal of an electrical one.

With such the construction, the condition of the sample surface, being observed by the viewer apparatus, can be displayed on a display screen of a computer, etc., therefore the sample surface can be observed easily.

And further, according to the present invention, there is provided the X-ray spectroscopic analyzer having a mechanism for observing a sample surface, as described in the above, further comprising, an illumination adjusting means, being positioned on an optical path of the illumination light from said illumination means, for adjusting at least one of an illuminating direction and an illuminating angle of the illumination light with respect to the sample.

With such the construction, the illuminating direction and/or the illuminating angle of the illumination light to be irradiated upon the sample can be changed freely by the illumination adjusting means, therefore it is possible to observe the condition of the contamination and/or the shape of the residue, much more clearly.

### BRIEF DESCRIPTION OF THE DRAWINGS

Those and other features, objects and advantages of the present invention will become more apparent from the following description when taken in conjunction with the accompanying drawings, wherein:
Fig. 1 is a general structure view of an X-ray spectroscopic analyzer having a mechanism for observing a sample surface, according to an embodiment of the present invention;
Fig. 2 shows an enlarged cross-section view for showing an essential portion of the same X-ray spectroscopic analyzer;
Fig. 3 is a plan view for showing a distribution condition of tip portion of fibers in the same X-ray spectroscopic analyzer;
Fig. 4 is a perspective view of a ring in the same X-ray spectroscopic analyzer; and
Fig. 5 is a view for showing an observed picture of the sample surface, which is obtained by the same X-ray spectroscopic analyzer.

### DETAILED DESCRIPTION OF PREFERRED EMBODIMENT

Hereinafter, embodiments according to the present invention will be fully explained by referring to the attached drawings.

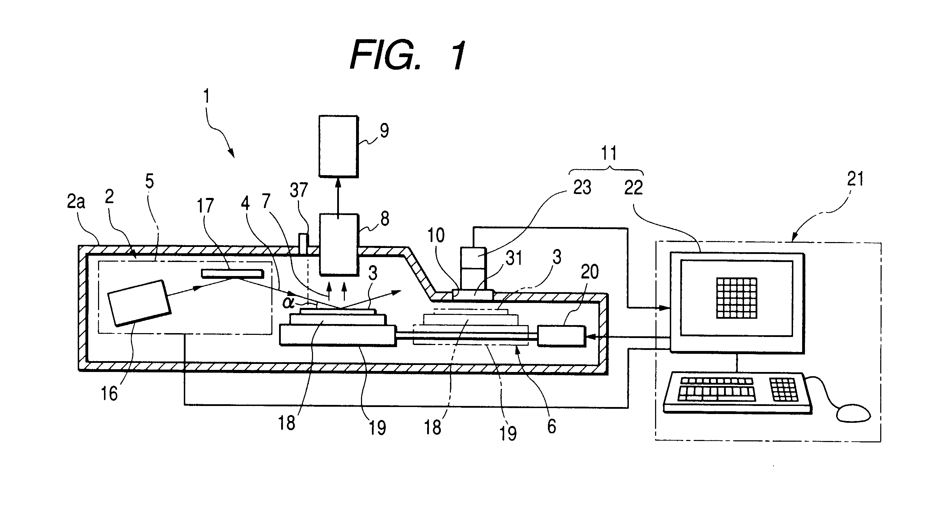

Fig. 1 is a general structure view of an X-ray spectroscopic analyzer, according to an embodiment of the present invention. This X-ray spectroscopic analyzer 1 shown herein is a so-called a total reflection X-ray spectroscopic analyzer, which irradiates X-ray upon a surface of a sample 3 having an optical plane, such as, a semiconductor wafer, within a chamber 2, so as to perform a spectroscopic analysis upon chemical elements of the sample 3. This X-ray spectroscopic analyzer 1 comprises an X-ray source 5 for generating a primary X-ray 4 therefrom, a moving means 6 for moving the sample 3 in the horizontal direction, a detector for detecting fluorescence X-ray 7 generating from the sample surface due to the irradiation of the primary X-ray 4 thereupon, an analyzer 9 for identifying the chemical element(s) upon the sample surface on the basis of an output of the detector 8, a viewer apparatus 11 for letting the sample 3 to be viewed through a window provided on a wall 2a of the above-mentioned chamber 2, and a (matrix-like) squared or sectioned member 12.

The above-mentioned X-ray source 5 comprises an X-ray generator 16 and a spectroscope 17 made of a spectrum crystal or an artificial thin-film grating of multi-layers, and it emits a monochromatic X-ray through the spectroscope 17 onto the sample surface at an incident angle α, being equal or less than 0.1° in general, thereby totally reflecting it thereon. The above-mentioned moving means 6 has a X-Y stage 19, on which is mounted a sample holder 18 for supporting the sample 3 thereon, being freely movable horizontally in orthogonal two-axial directions, and a driving apparatus 20 for moving that X-Y stage 19 horizontally to desired positions, including a X-ray irradiation position where the X-ray is irradiated upon when analyzing, as is indicated by a solid line, and a viewing position opposing to the window 10, as is indicated by a two-dot chain line. The X-Y stage 19 is moved further into a side of a distance sensor 37 which will be mentioned later (i.e., the left-hand side) when the height of the sample 3 is measured by that distance sensor 37. The X-ray source 5 and the moving means 6 mentioned above are controlled by a computer 21 being constructed with a display, etc.

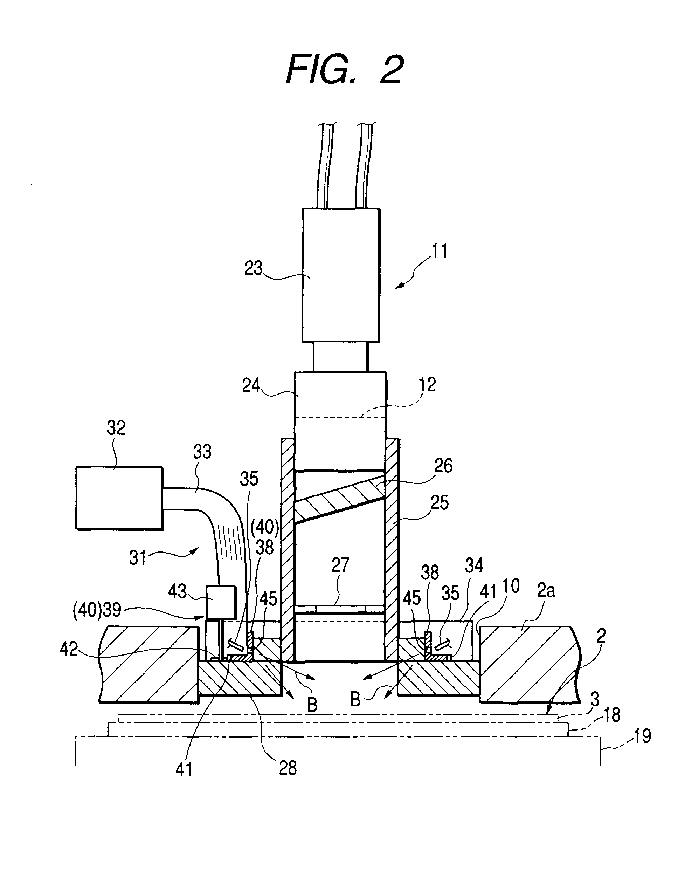

The above-mentioned viewer apparatus 11 is constructed with an image pickup device or element 23 (hereinafter, being called by a CCD camera), which takes a picture on the surface of the sample 3, to output a video signal as an electrical one, and a display device 22 of the above-mentioned computer 21 for displaying the picture of the sample surface upon the basis of the video signal from that CCD camera 23. As shown in Fig. 2, the above-mentioned CCD camera 23 is connected through a lens system 24, comprising a macro-lens, a zoom lens, etc., to a mirror cylinder 25, a lower end of which faces onto the window 10 on the chamber wall 2a mentioned above. Within that mirror cylinder 25, there are provided a lead glass 26 and an iris 27, and a ring-like lead glass 28 is disposed in an opening defined between the lower end of the mirror cylinder 25 and the window 10 mentioned above, thereby preventing the X-ray from leaking outside the chamber 2.

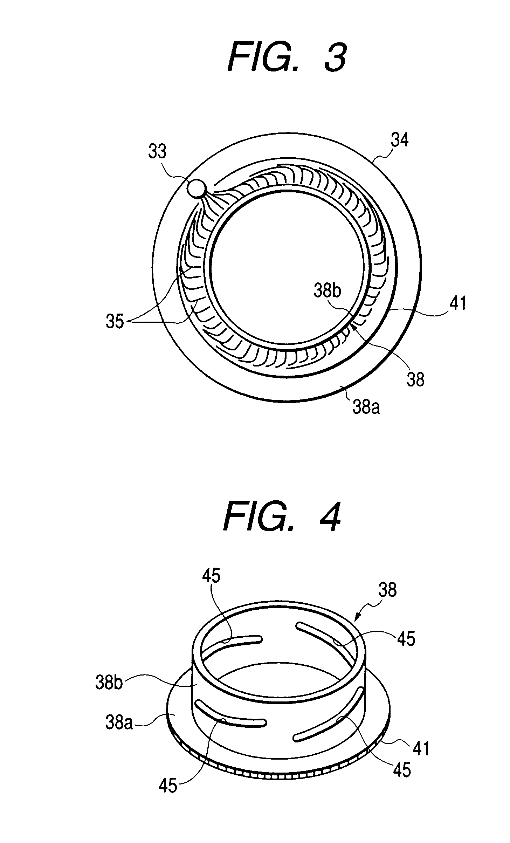

Also, upward the lead glass 28 mentioned above is provided an illumination means 31 for illuminating the surface of the sample 3, being disposed below the window 10, thereby guiding an illumination light from a peripheral portion of that window 10 obliquely down to a central portion thereof. This illumination means 31 has a bundle of optical fibers 33 for guiding the illumination light from a light source 32, such as, a halogen lump, etc., and that bundle of optical fibers 33 is disposed within a light guiding member 34 provided surrounding the mirror cylinder 25, as shown by a plan view in Fig. 3, so that each fiber tip portion 35 is directed radially to the central portion of the window 10, forming a light emitting portion at a terminal end of the optical fiber. The fiber tip portion 35, at the terminal end of each one of the optical fibers, is radically distributed and supported within the light guiding member 34, so that it is positioned to incline at a predetermined down angle (for example, 18°) to the horizontal plan, in a direction of a radius directing to the central portion of the window 10.

Further, inside the distribution position of the each fiber tip portion 35 mentioned above, a ring 38 is disposed concentrically with the light guiding member 34. This ring 38 is positioned on a light path of the illumination light irradiated from the fiber tip portions 35, so that the illumination light is selectively adjusted to be interrupted by or penetrate through it, and is movable rotationally around the ring center through a rotational driving apparatus 39 shown in the Fig. 2. With the ring 38 mentioned above and the rotational driving apparatus 39 is constructed an illumination adjuster apparatus 40, according to the present invention.

The ring 38 mentioned above comprises a bottom plate 38a made from a ring-like flat plate and a cylinder-like peripheral wall 38b, as shown in the perspective view of Fig. 4, wherein at different positions around the peripheral wall 38b are opened a plural number of slits 45, being inclined in a direction of the periphery thereof. The rotational driving apparatus 39 shown in the Fig. 2 is constructed with a gear 41, which is formed at a lower end of the above-mentioned ring 38 concentrically with therewith, a pinion 42 meshed with that gear 41, and driving machine 43 for driving that pinion 42 rotationally, for example, a servo motor. With this construction, by rotationally moving the ring 38 mentioned above, so as to change the position thereof, selectively in the peripheral direction, through the rotational driving apparatus 39, i.e., by changing the positions of the slits 45, such as penetrating cuts formed on that peripheral wall 38a, the illumination light, which is guided from the light source 32 through the bundle of optical fibers 33 onto the sample surface, can be changed freely in an irradiating direction on a plane parallel to the sample surface, as well as an irradiating angle on a plane orthogonal thereto, therefore, it can be irradiated upon the sample surface from the peripheral portion of the window 10 into a direction of the central portion thereof at a desired down angle, as shown by an arrow B. However, it is also possible to adjust only one of the irradiating direction and the irradiating angle.

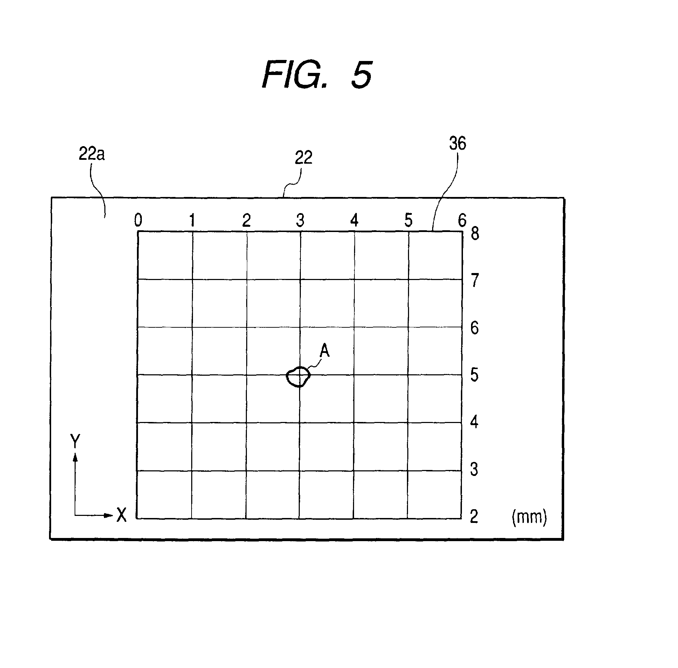

The matrix-like squared member 12, functioning as the position indicator means for indicating the view position on the sample 3, is made by drawing squares on the surface of a transparent thin plate. This squared member 12 is positioned on a way of the lens system 24. With this, as shown in Fig. 5, squares 36 are added on a picture displayed upon the display screen 22a of the above-mentioned display device 22, as a standard or marks for confirming the position on it. Correspondence can be made between the squares 36 and a coordinate position on the surface of the sample 3 by a plane rectangular coordinates (i.e., an X-Y coordinates) which the X-Y stage 19 has. Namely, a position at the origin on the squares 36 is inputted into the computer 21 as the coordinate position for indicating the present position of the X-Y stage 19 of the moving means 19, therefore the coordinates on the surface of the sample 3 comes to be (the coordinates at the origin on the squares 36) + (the coordinates on the squares 36). Then, the coordinate values of the residue A are read out by eyesight on the display screen 22a of the display device 22, on which the squares 36 are displayed, and thereafter the read-out coordinate values are inputted manually into the computer 21, thereby the position of the residue A is inputted into the computer 21 as the coordinate values, i.e., (the read-out coordinate values) + (the coordinate values of the origin).

Further, without using the square member 12 mentioned above, an indication is also possible of the view position on the sample 3 but reading out the coordinate values, for example, by clicking the residue A on the display screen 22a, when controlling the moving means 6 by the computer 21 and also calculating out the relationship between the sample 3 and the X-Y stage 19 by that at the same time. In this case, a clicking means, such as a mouse, may construct the position indicator means according to the present invention.

Further, in the Fig. 1, a laser device 27, being provided in the vicinity of the detector 8, constructs a distance sensor for detecting a height of the surface of the sample 3, which is positioned below the detector 8.

Hereinafter, explanation will be given on steps for analyzing the chemical element ( s ) by using the X-ray spectroscopic analyzer 1 mentioned above, in particular, upon the sample 3, such as the semiconductor wafer, etc., on the surface of which is formed the residue at one position after treating the surface with the solution, such as hydrofluoric acid, etc.

First of all, the computer 21 controls the moving means 6, to move the sample 3 held on the sample holder 18, horizontally, up to such the position, that the center thereof comes to be coincident with that of the window 10 formed on the chamber 2. Under this condition, the surface of the sample 3 is observed by means of the viewer apparatus 11. Namely, the surface picture of the sample 3 is picked up by the CCD camera 23, and then the picture of the sample surface is displayed on the display device 22. upon the basis of the video signal as the output thereof, therefore the condition of the residue A (see the Fig. 3) can be observed on the sample surface through that picture. In this manner, since the sample surface can be observed through the picture displayed on the screen of the display device 22, the operation of observation comes to be easy. Further, the focus of the CCD camera 23 is adjusted upon the basis of information of the height of the sample surface, which is detected by the laser 37 for use in detecting a height.

In this instance, by means of the illumination means 31, the illumination light B is irradiated upon the sample surface from the peripheral portion of the window 10, obliquely, directing to the central portion thereof, however, since it never enter into the CCD camera 23 directly, the condition of residue A can be observed clearly under a condition of dark field. Also, since the squares 36 of the squared member 12 are added onto the screen mentioned above, functioning as the position indicator means or the standard or marks for positioning by the eyesight, therefore the positional coordinates (X,Y) of the residue A can be confirmed easily, by using the squares functioning as that standard or marks. Namely, the coordinates of the residue A are read out on the X-Y coordinates, which are indicated on the display screen 22a of the display device 22. The origin of that X-Y coordinates may be, for example, the central point of the sample.

After completion of the observation on the residue A and the confirmation on the position thereof, upon the basis of the positional coordinates (X,Y) of the residue A, the computer 21 controls the moving means 6, so as to horizontally move the sample 3 up to such the position, that the primary X-ray from the X-ray source 5 irradiates upon that residue A, thereby conducting the X-ray spectroscopic analysis thereon. With this, the fluorescence X-ray 7 generating from the residue A on the sample surface is detected by the detector 8, and the chemical element(s) of the impurities contained in that residue A is identified by the analyzer 9, upon the basis of the output from the detector 8.

However, in the operation mentioned above, the explanation was made only on the case where the observation is made on the residue A and then specify the position thereof on the sample surface before making the X-ray spectroscopic analysis, however, for example, it is also possible to make the observation on the shape of the residue A by means of the above-mentioned viewer apparatus 11 after making the X-ray spectroscopic analysis upon the residue A, thereby to utilize for assumption of an interrelationship between the shape and the X-ray intensity in the X-ray spectroscopic analysis.

Also, in the operation mentioned above, the explanation was made only on the case where the X-ray spectroscopic analysis is made upon the residue A on the sample surface, however, also in a case where the X-ray spectroscopic analysis is made upon the contaminated portion on the sample surface directly, it may be made after making the observation on the contaminated portion and the confirmation on the position thereof, in the same steps, thereby enabling the effective X-ray spectroscopic analysis thereof.

Furthermore, though the lens system 24 in the viewer apparatus 11 is indicated to be constructed with the macro lens and the zoom lens, for example, in the embodiment mentioned above, however, other than that, it can be constructed with a zoom unit, a twin lens, etc., combining with various illuminations of, such as, a coaxial top light, an oblique top light, a polarization light, an oblique light, etc., for obtaining the observation being suitable for various kinds of foreign matters adhered on the sample surface.

Also, in the embodiment mentioned above, there was shown an example, in which the viewer apparatus 11 and/or the illumination means 31 are provided at the position separated from the analyzing position of the sample 3 where the primary X-ray 4 is irradiated upon, thereby viewing the sample 3 at that position, however, the present invention should not be restricted only to that, and in the place thereof, the view may be made on the sample 3 at the position where the primary X-ray 4 is irradiated, while illuminating the surface of the sample 3.

Also, when the peripheral position of that ring 38 is changed by rotating the ring 38 through the rotational driving apparatus 39, the inclined slots 45 on the peripheral wall 38a of the ring 38 are changed in the position thereof, and with this, the illumination light, being irradiated from the each fiber tip portion 35, can be interrupted by or penetrate through it, selectively. Accordingly, it is possible to irradiate the illumination light upon the sample surface from such appropriate direction and angle, that the residue A can be seen easily. Further, it is also possible to combine a plural number of the pictures taken under the illumination lights irradiated from various direction and/or angles of high and low, or to provide the CCD camera 23 of the viewer apparatus 11 in plural number thereof, so as to obtain the condition of the residue A and so on, upon the sample surface as a 3-D (three-dimensional) information. With doing so, it is possible to specify the position of the residue A and so on, with much higher accuracy or precision.

As was fully explained in the above, an X-ray spectroscopic analyzer having an observation mechanism, for observing a sample surface therethrough, according to the present invention, comprises: a viewer apparatus for letting the sample to be viewed therethrough; and an illumination means for illuminating a surface of the sample, by irradiating an illumination light upon the surface of said sample obliquely, while suppressing an incidence of a reflection light from the illumination light upon said viewer apparatus, therefore, a shape of the contaminated portion, the residue or the like, upon the sample surface, can be clearly observed on the viewer apparatus under dark field, with keeping the sample set within the X-ray spectroscopic analyzer.

While we have shown and described the embodiment and variations in accordance with our invention, it should be understood that the disclosed embodiment is susceptible of changes and modifications without departing from the scope of the invention. Therefore, we do not intend to be bound by the details shown and described herein but intend to cover all such changes and modifications falling within the ambit of the appended claims.

## Claims

1. An X-ray spectroscopic analyzer for analyzing a sample (3) by irradiating X-ray thereupon within a chamber (2), having a mechanism for observing a sample surface therethrough, comprising:
a viewer apparatus (11) for letting the sample to be viewed therethrough; and
an illumination means (32,33,35) for illuminating a surface of the sample, by irradiating an illuminating light upon the surface of said sample obliquely, while suppressing an incidence of a reflection light from the illumination light upon said viewer apparatus.

2. An analyzer as defined in the claim 1, further comprising a moving means (6, 19, 20) for moving the sample at least between an X-ray irradiation position where the X-ray is irradiated upon and a viewing position where a view is made upon, and a position indicator means for indicating the viewing position on the sample thereupon.

3. An analyzer as defined in the claim 1, wherein said viewer apparatus comprises an image pickup element (23) for taking a picture of the surface of said sample, so as to output a video signal of an electrical one.

4. An analyzer as defined in one of the claims 1 to 3, further comprising, an illumination adjusting means, being positioned on an optical path of the illumination light from said illumination means, for adjusting at least one of an illuminating direction and an illuminating angle of the illuminating light with respect to the sample.
